# EUROPEAN PATENT SPECIFICATION

(11) **EP 4 019 108 B1**
(45) Date of publication and mention of the grant of the patent: **15.05.2024**
(21) Application number: 21215571.7
(22) Date of filing: 17.12.2021
(51) Int. Cl.: B01D 29/11, B01D 29/64

(54) **SELF-CLEANING FILTER**
SELBSTREINIGENDER FILTER
FILTRE AUTONETTOYANT

(30) Priority: 23.12.2020 ES 202032775 U
(43) Date of publication of application: 29.06.2022
(73) Proprietor: Fluytec, S.A., 48950 Erandio (Vizcaya) (ES)
(72) Inventor: OTEGUI MARTÍNEZ, Pedro, 48950 ERANDIO (Vizcaya) (ES); MESA CUEVAS, Unai, 48950 ERANDIO (Vizcaya) (ES)
(74) Representative: Ungria López, Javier

(56) References cited:
- CN-A- 107 321 034
- CN-A- 108 079 636
- CN-A- 108 452 577
- CN-U- 204 261 429
- US-A- 3 017 029

## Description

### OBJECT OF THE INVENTION

The present invention relates to a self-cleaning filter which incorporates a gearbox so that the filter can increase the torque on the shaft and thus prevent clogging due to incrustations that the cleaning brush is unable to drag.

### BACKGROUND OF THE INVENTION AND TECHNICAL PROBLEM TO SOLVE

Filters are devices intended to retain the dirt of the fluid stream wherein they are located, whether it is air or liquid. Due to their own functionality, they require periodic cleaning so that they do not become blocked and continue to operate in a controlled manner, since if the filter becomes dirty, the pressure necessary to make fluid pass through the filtering means increases, until the filter is completely blocked.

In order to prevent the filter removal process, with the resulting problems due to stopping the production, there are a variety of self-cleaning filters that are known in the current state of the art. These filters incorporate a device intended to clean the filter itself without requiring the removal thereof.

These self-cleaning filters perform the cleaning by means of rotation, actuated by a motor, either of a dip tube that sucks the inside of the filtering elements, or of a shaft that incorporates a series of circular nozzles that suck the inside of the filtering elements. Due to this suction, the dirt incrusted in the walls of the filtering elements is eliminated.

However, current self-cleaning filters exhibit a number of drawbacks, such as:
- maintenance of the motor,
- maintenance due to wear of the mobile parts,
- greater water loss to ensure 100% cleanliness of the filtering element.

In this way, although self-cleaning filters have been used for decades, this technology still presents a series of aspects to be improved and even resolved, such as:
- operation without using a motor to make the cleaning elements rotate,
- operation without using a motor for the horizontal translational movement and, reducing the maintenance and costs,
- the fact that the suction mouths do not pass over 100% of the surface of the filtering element, or pass over only once,
- high water loss during washing.

The invention disclosed in the utility model ES1199133U solves these problems by means of a self-cleaning filter that does not need to be activated by any external element and wherein water loss for cleaning was reduced to a minimum.

The aforementioned utility model presents the integration of a self-cleaning system without the presence of motors or external elements, offering the following advantages:
- it ensures that the suction mouths pass over 100% of the surface of the filtering element and, also, repetitively, during cleaning. It must be noted that current devices cannot ensure the sweeping of 100% of the area since it depends on the ratio between translation and rotation speeds. Moreover, current devices only pass over once, so the washing has worse performance,
- water loss during washing is negligible, less than 5 m³/h in the majority of cases,
- the floor area (footprint) and the number of pre-treatment elements (fewer bodies, fewer valves, fewer control elements, etc.) are reduced,
- maintenance times of the equipment are reduced given that the number of objects susceptible to maintenance are significantly reduced. Stopped equipment always entails losses for the plant,
- load loss of the system is reduced as accessories are removed, which improves the energy efficiency of the plant,
- noise, pollution and electricity consumption are reduced since there is no motor to carry out the cleaning of the equipment,
- elements are used that enable continuous production while the autonomous cleaning of the filter is carried out, without the need to stop production, resulting in the elimination of losses for the plant.

However, this invention also presents a series of problems that are not solved in the current state of the art as described below.

It is usual that in the self-cleaning filter, especially in those applications wherein the degree of soiling is important, the resistant torque generated by the friction of the rotation shaft brushes on the filtering profile may exceed the torque generated by the propeller, or turbine, by turbining a certain wash flow, which would make cleaning difficult since the brushes would be practically stuck without the possibility of moving.

Likewise, if the specific washing flow rate, which is the flow rate that the propeller turbines, was to be minimised for example to values lower than 5% of the feed water, the torque generated by the propeller could also be insufficient to overcome the resistant torque even in low soiling applications.

Moreover, once the resistant torque associated with static friction has been overcome and, since the friction decreases as the profile is being washed, since the propeller is directly coupled to the rotation shaft, the rotation speed could increase excessively, reaching values that could damage some of the support elements, such as bushings or bearings.

In addition, this excess speed of the rotation shaft can generate excessive wear of the brushes since the higher the rotation speed the more turns the shaft would have made for the same washing time. Logically, as the brush wears out, washing performance will deteriorate.

The present invention solves these problems that were not resolved in the present state of the art. A self-cleaning filter comprising rotating brushes and a gear box is disclosed in CN204261429U.

### DESCRIPTION OF THE INVENTION

The object of the present invention relates to a self-cleaning filter the configuration and design of which endow it with an optimisation in the management of the torque of the shaft, which would solve the aforementioned problems.

The self-cleaning filter basically consists of a cylindrical casing wherein a filtering element is concentrically located and a rotation shaft that incorporates brushes formed by blades ending in bristles that make contact with the inner surface of the filtering element in order to eliminate dirt that may have become incrusted. Attached to the rotation shaft is a propeller which, at the time of washing, is activated by the movement of a portion of the fluid stream wherein the self-cleaning filter is submerged, causing the propeller to rotate, which in turn drags, through the coupling of the gearbox, the rotation shaft and therefore the brushes.

By means of the present invention, the torque on the rotation shaft is substantially increased for the same working conditions in the propeller, i.e., for one same pressure and flow rate of the washing stream, one same propeller design, etc.

Furthermore, as an additional effect of the increase in motor torque, the shaft is made to rotate at a slower speed, which is also an advantage, since both the wear of the support elements and that of the brushes are prevented. In this way, all this entails an increase in the useful life of the equipment and/or a better washing performance.

To achieve this, the self-cleaning filter of the present invention comprises a gearbox immersed in the liquid that incorporates an input shaft connected to the propeller shaft and an output shaft connected to the rotation shaft, such that the direct coupling between the rotation shaft and the propeller is removed.

In this type of equipment, the available space is a limitation, so that the gearbox can have several gear ratio stages. In addition, the gearbox can be of the parallel or planetary shaft type depending on whether it incorporates parallel shaft gear or planetary gear, respectively.

With the present invention, reductions of at least 10:1 can be obtained, being able to reach reductions greater than 16:1.

Moreover, these very high reductions make it convenient to introduce a protection to the gears which, as they can be immersed in a corrosive fluid, can be made of non-metallic materials.

To do this, a suitably sized part is available that attaches the output shaft of the gearbox with the rotation shaft where the brushes are fixed, to act by way of a fuse. In other words, this part is intended to break when reaching a somewhat lower effort than the effort with which the gear teeth of the gearbox would be damaged. In addition, this part is easily replaceable in case it breaks.

The mechanical fuse consists of a shaft with a polygonal cross-section, preferably square, which fits into a coupling hole located at one end of the rotation shaft and which, once assembled, is coupled to another similar coupling hole, located at the output shaft of the gearbox.

The selection of the fuse material is determined based on the resistance torque comparison condition between the fuse and the set of gears. That is, the selected material must be that which meets the condition that the collapse torque of the fuse is half the collapse torque of the set of gears. The selected material could be PVC-u, PP or PA, depending on the value of the maximum shear stress presented in the fuse at the time of collapse.

### BRIEF DESCRIPTION OF THE FIGURES

To complete the description of the invention, and for the purpose of helping to make the features thereof more readily understandable, according to a preferred exemplary embodiment thereof, a set of drawings is included wherein, by way of illustration and not limitation, the following figures have been represented:
- Figure 1A represents a longitudinal cross-sectional view of a self-cleaning filter with a planetary gearbox.
- Figure 1B represents a front view of the self-cleaning filter of Figure 1A.
- Figure 2A represents a longitudinal cross-sectional view of a self-cleaning filter with a parallel gearbox.
- Figure 2B represents a front view of the self-cleaning filter of Figure 2A.
- Figure 3A represents a longitudinal cross-sectional view of a parallel gearbox.
- Figure 3B represents a transversal cross-sectional view of a parallel gearbox.
- Figure 4 represents the gearbox of Figure 3A coupled between the cleaning rotation shaft, by means of the output shaft, and the propeller shaft, by means of the input shaft.
- Figure 5A represents a longitudinal cross-sectional view of a planetary gearbox.
- Figure 5B represents a transversal cross-sectional view of a planetary gearbox.
- Figure 6 represents the gearbox of Figure 5A coupled between the cleaning rotation shaft, by means of the output shaft, and the propeller shaft, by means of the input shaft.

A list of the references used in the figures is provided below:
- 1a.: Parallel gearbox.
- 1b.: Planetary gearbox.
- 2.: Input shaft.
- 3.: Output shaft.
- 4a.: Parallel shaft gear.
- 4b.: Planetary gear.
- 5.: Rotation shaft.
- 6.: Mechanical fuse.
- 7.: Coupling hole.
- 8.: Propeller.
- 9.: Brushes.
- 10.: Filtering element.

### DESCRIPTION OF A PREFERRED EMBODIMENT OF THE INVENTION

The present invention relates to an optimised self-cleaning filter, wherein a gearbox has been incorporated so that the motor torque with which the rotation shaft (5) that incorporates the cleaning brushes (9) operates can be selected.

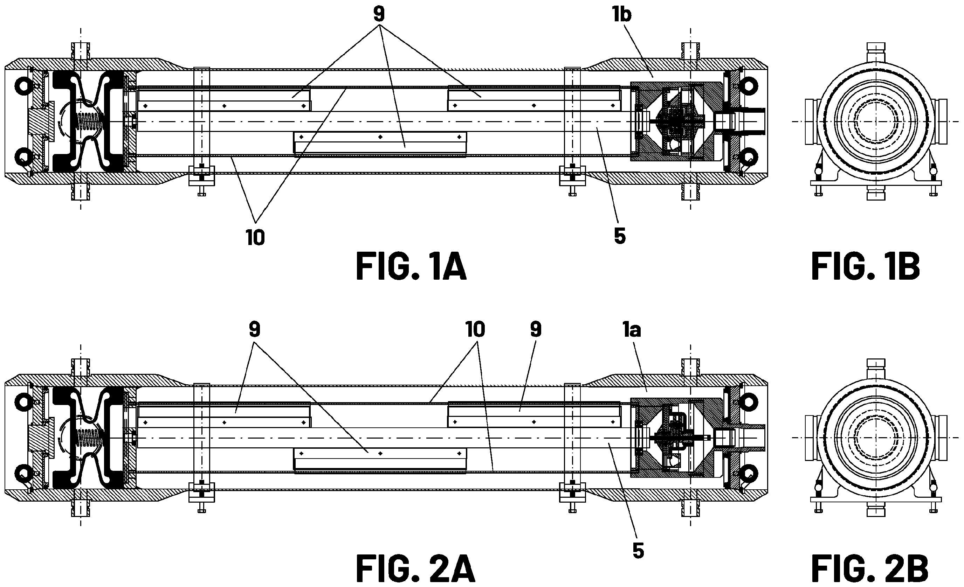

Figures 1 and 2 (1A, 1B, 2A and 2B) represent the self-cleaning filter of the invention, basically consisting of a cylindrical casing wherein a filtering element (10) is concentrically housed and a rotation shaft (5) that solidly incorporates the cleaning brushes (9). Each of the filters shown incorporates a different type of gearbox (1a, 1b), being identical in every other aspect. Thus, the filter of Figure 1 incorporates a planetary gearbox (1b), whereas the filter of Figure 2 incorporates a parallel gearbox (1a).

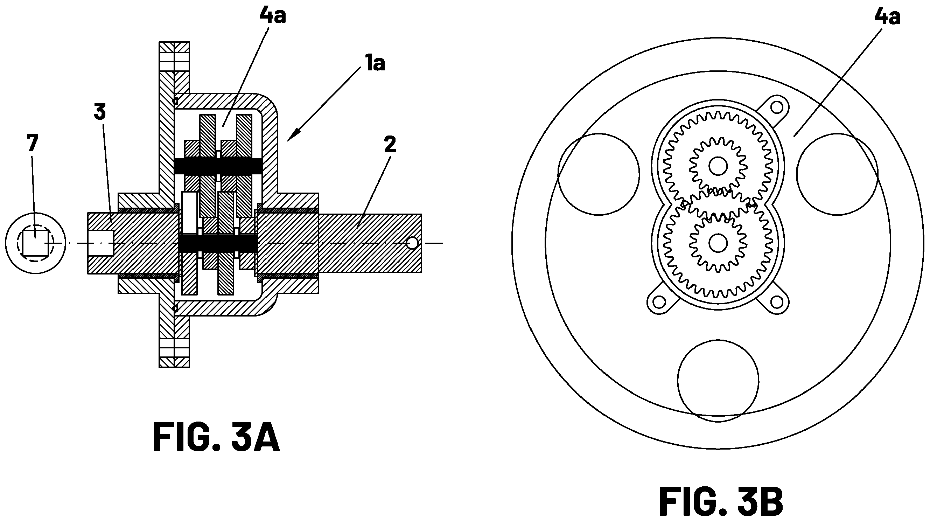

Figure 3A represents a cross-sectional view of the parallel gearbox (1a) incorporating the filter of Figure 1. In this view it can be seen how the input shaft (2) is connected to a coupling pinion that is part of parallel shaft gear (4a) that ends in a coupling wheel attached to the output shaft (3) of the parallel gearbox (1a). The gear (4a) has two shafts in which different wheels of one of the shafts mesh with wheels of the other shaft, depending on the required reduction.

Figure 3B shows the coupling of the wheels of the parallel shaft gear (4a).

The output shaft (3) of the gearbox (1a, 1b) incorporates a coupling hole (7) intended to act as a housing to fit a mechanical fuse (6) in a preferably tight-fitted manner. The cross section of the coupling hole (7), like that of the mechanical fuse (6), can be polygonal or circular with some protrusion, although in a preferred embodiment, due to the ease of manufacture thereof, it is square. The coupling hole (7) is not only located in the output shaft (3) of the gearbox (1a, 1b), but also in the rotation shaft (5) and in a tight-fitted manner so that the transmission from the shaft of the propeller (8) is perfect.

The need to incorporate the mechanical fuse (6) is due to the high reductions that can be achieved with the gearbox (1a, 1b), which makes it convenient to introduce a protection to the gears that can also be made of non-metallic materials, since they can be submerged in a corrosive fluid.

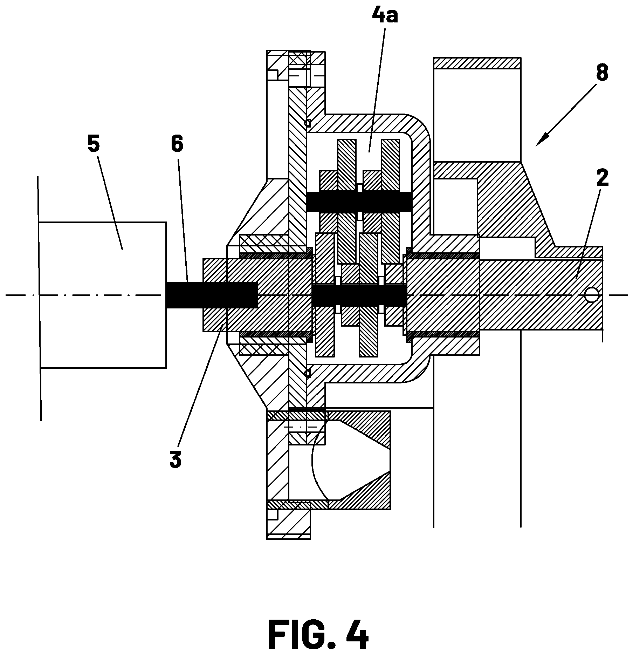

Figure 4 represents the parallel gearbox (1a) coupled, by means of the input shaft (2) to the shaft of the propeller (8), wherein the energy is received in the self-cleaning filter and, by means of the output shaft (3), to the cleaning rotation shaft (5) carrying the brushes (9), by means of the mechanical fuse (6).

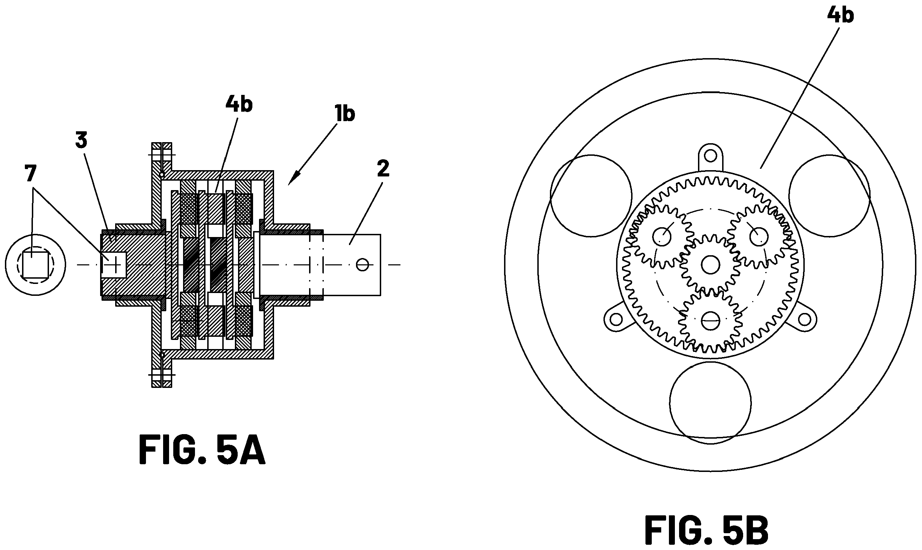

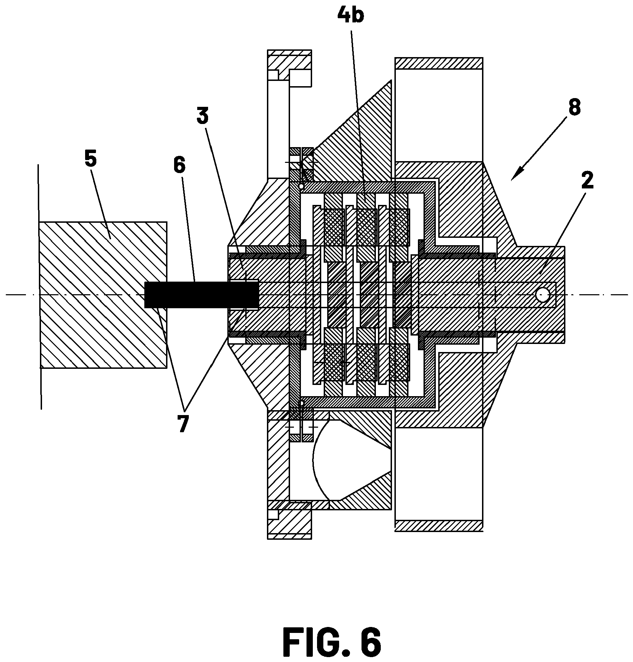

Figures 5A, 5B and 6 correspond to a self-cleaning filter with a planetary gearbox (1b), i.e., instead of incorporating parallel shaft gear (4a), as in Figures 3A, 3B and 4, it incorporates planetary gear (4b), being identical in everything else.

Lastly, it must be indicated that the present invention must not be limited to the embodiment described herein. Other configurations may be carried out by those skilled in the art based on the present description. Accordingly, the scope of the invention is defined by the following claims.

## Claims

1. Self-cleaning filter which incorporates an inlet of a fluid stream, a filtering element (10) with an inner surface and comprises a rotating shaft (5) with a series of solidly attached brushes (9) that make contact with the inner surface of the filtering element (10)for cleaning the inner surface of the filtering element (10), the rotating shaft (5) being attached to the shaft of a propeller (8), the self-cleaning filter being **characterised in that** it comprises a reduction gearbox (1a, 1b) with an input shaft (2) attached to the shaft of the propeller (8) and an output shaft (3) attached to the rotating shaft (5) and **in that** the propeller (8) is activated by the movement of a portion of the fluid stream wherein the self-cleaning filter is submerged, causing the propeller (8) to rotate, which in turn drags, through the coupling of the reduction gearbox (1a, 1b), the rotation shaft (5) and therefore the brushes (9) and **in that** it comprises a mechanical fuse (6) located between the rotating shaft (5) and the output shaft (3) of the reduction gearbox (1a, 1b).

2. Self-cleaning filter, according to claim 1, **characterised in that** the reduction gearbox (1a, 1b) incorporates parallel shaft gear (4a).

3. Self-cleaning filter, according to claim 1, **characterised in that** the reduction gearbox (1a, 1b) incorporates planetary gear (4b).

4. Self-cleaning filter, according to claim 2 or 3, **characterised in that** the torque reduction is in a ratio of at least 10:1.

5. Self-cleaning filter, according to claim 1, **characterised in that** both the output shaft (3) and the rotation shaft (5) incorporate a coupling hole (7) intended to house the mechanical fuse (6).

6. Self-cleaning filter, according to claim 5, **characterised in that** the mechanical fuse (6) fits into the coupling hole (7) in a tight-fitted manner.

## Patentansprüche

1. Selbstreinigender Filter, der einen Einlass eines Fluidstroms, ein Filterelement (10) mit einer Innenfläche beinhaltet und eine rotierende Welle (5) mit einer Reihe von fest angebrachten Bürsten (9) umfasst, die mit der Innenfläche des Filterelements (10) einen Kontakt herstellen, um die Innenfläche des Filterelements (10) zu reinigen, wobei die rotierende Welle (5) an der Welle eines Propellers (8) angebracht ist, wobei der selbstreinigende Filter **dadurch gekennzeichnet ist, dass** er ein Untersetzungsgetriebe (1a, 1b) mit einer an der Welle des Propellers (8) angebrachten Eingangswelle (2) und einer an der rotierenden Welle (5) angebrachten Ausgangswelle (3) umfasst und dass der Propeller (8) durch die Bewegung eines Teils des Fluidstroms aktiviert wird, wobei der selbstreinigende Filter eingetaucht ist, wodurch der Propeller (8) zum Rotieren gebracht wird, was wiederum durch die Kopplung des Untersetzungsgetriebes die rotierende Welle (5) und demzufolge die Bürsten (9) mitnimmt, und dass sie eine mechanische Sicherung (6) umfasst, die sich zwischen der rotierenden Welle (5) und der Ausgangswelle (3) des Untersetzungsgetriebes (1a, 1b) befindet.

2. Selbstreinigender Filter nach Anspruch 1, **dadurch gekennzeichnet, dass** das Untersetzungsgetriebe (1a, 1b) ein Parallelwellengetriebe (4a) beinhaltet.

3. Selbstreinigender Filter nach Anspruch 1, **dadurch gekennzeichnet, dass** das Untersetzungsgetriebe (1a, 1b) ein Planetengetriebe (4b) beinhaltet.

4. Selbstreinigender Filter nach Anspruch 2 oder 3, **dadurch gekennzeichnet, dass** die die Drehmomentreduzierung in einem Verhältnis von wenigstens 10:1 erfolgt.

5. Selbstreinigender Filter nach Anspruch 1, **dadurch gekennzeichnet, dass** sowohl die Ausgangswelle (3) als auch die rotierende Welle (5) ein Kopplungsloch (7) beinhalten, das die mechanische Sicherung (6) aufnehmen soll.

6. Selbstreinigender Filter nach Anspruch 5, **dadurch gekennzeichnet, dass** die mechanische Sicherung (6) in einer eng anliegenden Weise in das Kopplungsloch (7) eingepasst ist.

## Revendications

1. Filtre autonettoyant qui comprend une entrée d'un flux de fluide, un élément filtrant (10) avec une surface interne et comprend un arbre rotatif (5) avec une série de brosses (9) solidement fixées qui établissent le contact avec la surface interne de l'élément filtrant (10) pour nettoyer la surface interne de l'élément filtrant (10), l'arbre rotatif (5) étant fixé à l'arbre d'une hélice (8), le filtre autonettoyant étant **caractérisé en ce qu'**il comprend un réducteur (1a, 1b) avec un arbre d'entrée (2) fixé à l'arbre de l'hélice (8) et un arbre de sortie (3) fixé à l'arbre rotatif (5) et **en ce que** l'hélice (8) est activée par le mouvement d'une partie du flux de fluide, dans lequel le filtre auto-nettoyant est immergé, amenant l'hélice (8) à tourner, qui entraîne, à son tour, par le biais du couplage du réducteur (1a, 1b), l'arbre de rotation (5) et par conséquent les brosses (9) et **en ce qu'**il comprend un fusible mécanique (6) positionné entre l'arbre rotatif (5) et l'arbre de sortie (3) du réducteur (1a, 1b).

2. Filtre autonettoyant selon la revendication 1, **caractérisé en ce que** le réducteur (1a, 1b) comprend un engrenage d'arbre parallèle (4a).

3. Filtre autonettoyant selon la revendication 1, **caractérisé en ce que** le réducteur (1a, 1b) comprend un engrenage planétaire (4b).

4. Filtre autonettoyant selon la revendication 2 ou 3, **caractérisé en ce que** la réduction de couple est dans un rapport d'au moins 10 : 1.

5. Filtre autonettoyant selon la revendication 1, **caractérisé en ce qu'**à la fois l'arbre de sortie (3) et l'arbre de rotation (5) comprennent un trou de couplage (7) prévu pour loger le fusible mécanique (6).

6. Filtre autonettoyant selon la revendication 5, **caractérisé en ce que** le fusible mécanique (6) se monte dans le trou de couplage (7) d'une manière ajustée.
